# EUROPÄISCHE PATENTSCHRIFT

(11) **EP 2 260 127 B1**
(45) Veröffentlichungstag und Bekanntmachung des Hinweises auf die Patenterteilung: **15.10.2014**
(21) Anmeldenummer: 09726704.1
(22) Anmeldetag: 22.01.2009
(51) Int. Cl.: C25D 3/04, C25D 5/14, C25D 5/18, C25D 7/10, C25D 15/02, F16J 9/26

(54) **STRUKTURIERTE CHROM-FESTSTOFFPARTIKEL-SCHICHT UND VERFAHREN ZU DEREN HERSTELLUNG**
STRUCTURED CHROME SOLID PARTICLE LAYER AND METHOD FOR THE PRODUCTION THEREOF
COUCHE DE CHROME À PARTICULES SOLIDES STRUCTURÉE ET SON PROCÉDÉ DE FABRICATION

(30) Priorität: 04.04.2008 DE 102008017270
(43) Veröffentlichungstag der Anmeldung: 15.12.2010
(73) Patentinhaber: Federal-Mogul Burscheid GmbH, 51399 Burscheid (DE)
(72) Erfinder: LINDE, Rudolf, 42929 Wermelskirchen (DE); DÜRDOTH, Stefan, 51399 Burscheid (DE)
(74) Vertreter: Geyer, Fehners & Partner
(86) Internationale Anmeldenummer: PCT/EP2009/000384
(87) Internationale Veröffentlichungsnummer: WO 2009/121443

(56) Entgegenhaltungen:
- EP-A- 0 668 375
- EP-A- 0 841 413
- EP-A- 1 719 827
- EP-A- 1 798 313
- WO-A-01/04386
- FR-A- 2 558 852

## Beschreibung

Die Erfindung bezieht sich auf eine strukturierte Chrom-Feststoffpartikel-Schicht, die eine Mikrostrukturierung und ein Rißnetzwerk aufweist, wobei in das Rißnetzwerk Feststoffpartikel eingelagert sind. Die Erfindung bezieht sich weiter auf ein Verfahren zur Herstellung dieser strukturierten Chrom-Feststoffpartikel-Schicht und ein Maschinenelement, das mit der strukturierten Chrom-Feststoffpartikel-Schicht beschichtet ist.

Maschinenelemente, die Reibung und hohen Temperaturen ausgesetzt sind, beispielsweise Kolbenringe, müssen Oberflächen aufweisen, die korrosionsbeständig, verschleiß- und freßbeständig sowie brandspurfest sind und darüber hinaus gute Gleiteigenschaften aufweisen. Dazu können die Maschinenelemente, insbesondere deren Laufflächen, mit Verschleißschutzschichten in Form von elektrolytisch abgeschiedenen Hartchromschichten überzogen werden.

Zur Verbesserung der Verschleiß- und Freßbeständigkeit können in galvanische Hartchromschichten Feststoffpartikel eingelagert werden. In der DE 3531410 A1 und der EP 0217126 A1 sind galvanische Hartchromschichten beschrieben, die ein Rißnetzwerk aufweisen und in deren Risse Feststoffpartikel eingelagert sind. Besonders vorteilhafte Eigenschaften lassen sich durch in die Risse einer solchen elektrolytisch abgeschiedenen Hartchromschicht eingelagerte Diamantpartikel mit einer Größe im Bereich von 0,25 - 0,4 µm erreichen, wie in der WO 2001/004386 A1 und der EP 1114209 B1 beschrieben.

Ferner können galvanische Hartchromschichten mit einer Mikrostrukturierung versehen werden. Aus der DE 10255853 A1, der WO 2004/050960 A1, der DE 102004019370 A1 und der WO 2005/108648 A2 sind strukturierte galvanische Hartchromschichten bekannt, die besonders gute tribologische Eigenschaften aufweisen. Durch die Zusammensetzung des bei der Herstellung verwendeten Elektrolyten und die geringe Stromausbeute unterhalb von 12 % als besondere Verfahrensmaßnahmen ist gemäß diesem Stand der Technik eine Hartchromschicht erhältlich, deren Struktur näpfchenförmig und/oder labyrinthartig und/oder säulenförmig ist. Diese näpfchenförmige und/oder labyrinthartige und/oder säulenförmige Struktur der Oberfläche sorgt für hervorragende Gleiteigenschaften und sehr gute Notlaufeigenschaften, da die Oberflächenstruktur durch eine gute Schmiermittelhaltefähigkeit ausgezeichnet ist.

Um die hohe Verschleiß-, Freß- und Brandspurbeständigkeit der oben genannten Chrom-Feststoffpartikel-Schicht mit den guten tribologischen Eigenschaften einer strukturierten Hartchromschicht zu kombinieren, kann auf die oben beschriebene strukturierte Hartchromschicht eine Chrom-Feststoffpartikel-Schicht aufgebracht und so eine Doppelschicht erzeugt werden. Auf diese Weise kann die vorteilhafte näpfchenförmige und/oder labyrinthartige und/oder säulenförmige Struktur der strukturierten Hartchromschicht auf die verglichen mit der strukturierten Hartchromschicht noch verschleißbeständigere Chrom-Feststoffpartikel-Schicht übertragen, d.h. durch die Chrom-Feststoffpartikel-Schicht fortgeführt werden, und so die sehr hohe Verschleißbeständigkeit der Chrom-Feststoffpartikel-Schicht mit den tribologischen Vorteilen der strukturierten Hartchromschicht kombiniert werden.

Nachteilig an dieser Art der Doppelbeschichtung ist jedoch, daß der elektrolytische Abscheidungsprozeß wegen des erforderlichen Wechsels der Abscheidungsbedingungen und des Elektrolyten aufwendig und teuer ist, eine insgesamt relativ dicke Beschichtung auf das Maschinenelement aufgebracht werden muß und die Strukturierung der oberen Chrom-Feststoffpartikel-Schicht häufig nicht mehr so ausgeprägt ist wie in der zuvor aufgebrachten strukturierten Hartchromschicht. Des weiteren bringt diese Doppelbeschichtung das Risiko mit sich, daß nach längeren Laufzeiten reibender Maschinenelemente, beispielsweise bei langen Motorlaufzeiten entsprechend beschichteter Kolbenringe, die obere Schicht abgetragen wird und dann die darunter liegende strukturierte Hartchromschicht, welche partikelfrei ist, zu einem erhöhten Verschleiß und zur Brandspurbildung führt.

Bislang war es nicht möglich, in eine so strukturierte Chromschicht Partikel einzulagern, da rißbildende Verfahrensmaßnahmen zur Einlagerung von Partikeln nicht mit strukturauslösenden Verfahrensmaßnahmen in einem gemeinsamen Prozeß vereinbar waren.

Der vorliegenden Erfindung liegt daher die Aufgabe zugrunde, die oben genannten Nachteile des Standes der Technik zu überwinden und eine galvanische Hartchromschicht bereitzustellen, die hoch verschleißbeständig und brandspurfest ist und gleichzeitig gute tribologische Eigenschaften sowie hervorragende Notlaufeigenschaften aufweist. Weiter ist es Aufgabe der vorliegenden Erfindung, ein Verfahren zur Herstellung einer solchen galvanischen Hartchromschicht bereitzustellen.

Erfindungsgemäß wird diese Aufgabe gelöst durch eine strukturierte Chrom-Feststoffpartikel-Schicht mit einem Rißnetzwerk, in das Feststoffpartikel eingelagert sind, wobei die Rißdichte 10 - 250 /mm beträgt, die Korngröße der Feststoffpartikel im Bereich von 0,01 - 10 µm liegt, der Anteil der Feststoffpartikel an der gesamten Schicht 1 - 30 Vol.-% beträgt und die Chrom-Feststoffpartikel-Schicht eine Mikrostrukturierung mit Vertiefungen in der Oberfläche der Schicht aufweist, wobei der Oberflächenanteil der Vertiefungen 5 - 80 % beträgt und die Schicht pro mm² der Oberfläche durchschnittlich 3 bis 100 Verliefungen mit einer maximalen Ausdehnung von mehr als 30 µm aufweist.

Die Aufgabe wird weiter gelöst durch ein Verfahren zur Herstellung einer strukturierten Chrom-Feststoffpartikel-Schicht, umfassend die Schritte, daß
(a) ein Maschinenelement in einen Elektrolyt eingebracht wird, der
   eine Cr(VI)-Verbindung in einer Menge, die 100 g/l - 400 g/l Chromsäureanhydrid entspricht,
   1 - 8 g/l Schwefelsäure,
   5 -18 g/l aliphatische Sulfonsäure mit 1 - 6 Kohlenstoffatomen,
   Feststoffpartikel mit einer Größe von 0,01 - 10 µm und
   weniger als 0,5 g/l anorganische Fluoridverbindungen enthält,
(b) auf das Maschinenelement elektrolytisch eine Chrom enthaltende Schicht abgeschieden wird, bei einer Stromdichte von 20 - 100 A/dm² und einer Stromausbeute von 12 % oder weniger, anschließend
(c) die Stromrichtung umgekehrt wird, wobei sich die Feststoffpartikel in Mikrorisse der Schicht einlagern,
   und die Schritte (b) und (c) gegebenenfalls wiederholt werden.

Mit diesem Verfahren ist es überraschenderweise möglich, in eine Chrom enthaltende Schicht Feststoffpartikel einzulagern und gleichzeitig eine Mikrostrukturierung dieser Schicht zu erzeugen, wodurch die erhaltene Schicht hervorragende Verschleißeigenschaften, sehr hohe Brandspurfestigkeiten und gleichzeitig hervorragende tribologische Eigenschaften sowie Notlaufeigenschaften aufweist.

Die Figuren 1 - 3 zeigen rasterelektronenmikroskopische Aufnahmen der erfindungsgemäßen strukturierten Chrom-Feststoffpartikel-Schichten.

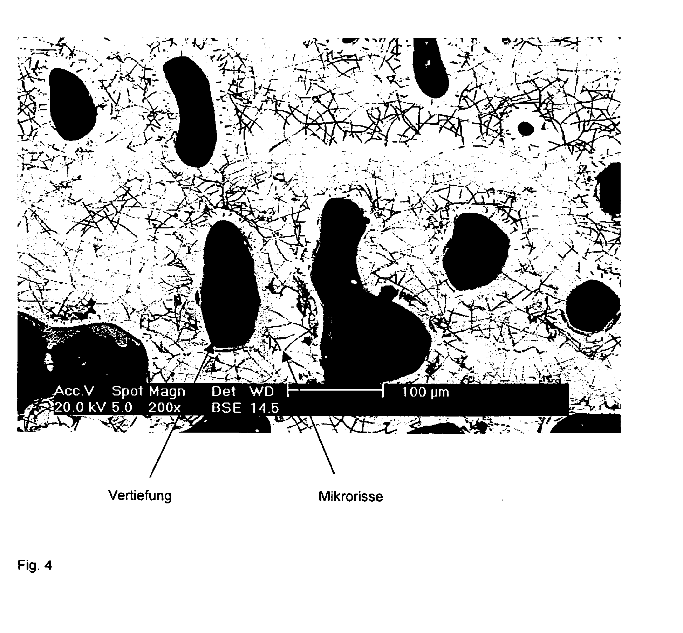

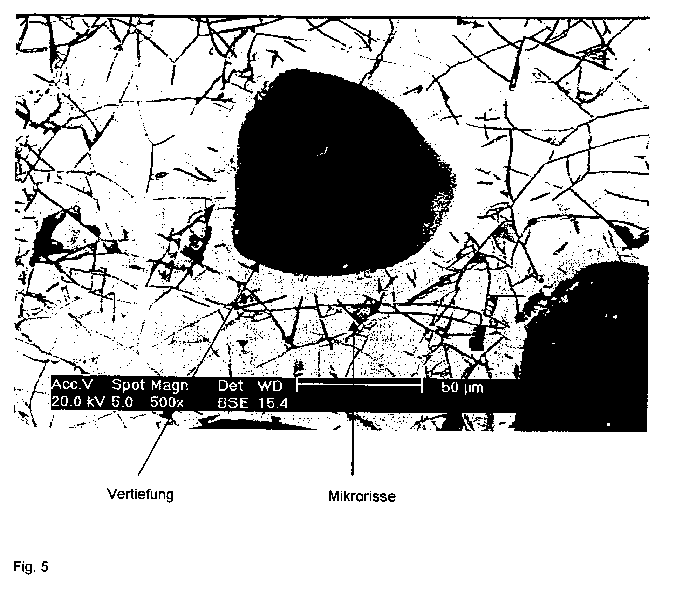

Die Figuren 4 und 5 zeigen rasterelektronenmikroskopische Schliffaufnahmen der erfindungsgemäßen strukturierten Chrom-Feststoffpartikel-Schichten, bei denen die Oberflächen der strukturierten Chrom-Feststoffpartikel-Schichten angeschliffen wurden, um das Rißnetzwek der Schichten sichtbar zu machen.

Unter Maschinenelementen werden im Sinne der Erfindung Maschinenelemente jeglicher Art verstanden, die mit einer strukturierten Chrom-Feststoffpartikel-Schicht ausgestattet werden sollen. Dabei kann es sich um metallische oder nicht metallische Maschinenelemente handeln. Soll auf einem nicht metallischen Gegenstand eine strukturierte Chrom-Feststoffpartikel-Schicht ausgebildet werden, so wird dieser zunächst durch Aufbringen eines dünnen Metallfilms elektrisch leitend gemacht. Die erfindungsgemäße Beschichtung kann zur Beschichtung einer Vielzahl von Maschinenelementen eingesetzt werden, insbesondere zur Beschichtung von Maschinenteilen, die einem mechanischen Verschleiß, insbesondere einem Reibverschleiß ausgesetzt sind, beispielsweise Kolbenringen, Zylindern, Kolben, Bolzen, Nockenwellen, Dichtungen, Verbundmaterialien, Ventilen, Lagern, Druckzylindern und Prägewalzen. Bevorzugte Maschinenelemente sind Kolbenringe, Zylinder und Kolben für Verbrennungsmotoren, insbesondere Kolbenringe.

Zur Ausbildung der strukturierten Chrom-Feststoffpartikel-Schicht wird das Maschinenelement in den Elektrolyten eingebracht und kathodisch geschaltet. An das Maschinenelement wird ein Gleichstrom oder ein pulsierender Gleichstrom angelegt, beispielsweise ein pulsierender Gleichstrom mit einer Frequenz bis 10 kHz. Im Abscheidungsschritt (b) bildet sich erfindungsgemäß ein Rißnetzwerk und eine Mikrostrukturierung der Schicht aus. Im Umpolungsschritt (c) wird das Werkstück anodisch geschaltet und die Mikrorisse weiten sich auf, so daß sich die Feststoffpartikel in die aufgeweiteten Mikrorisse einlagern. Die Feststoffpartikel werden dabei bevorzugt im Elektrolyten in der Schwebe gehalten. Dies kann über die Anpassung der Dichte des Elektrolyten an die Dichte der Feststoffpartikel erreicht werden. Ferner können dem Elektrolyten oberflächenaktive Substanzen zugesetzt werden. Bevorzugt enthält der Elektrolyt keine oberflächenaktiven Substanzen. Die Mikrostruktur der Oberfläche bleibt trotz des Umpolungsschrittes erhalten und die Beschichtung vereint die vorteilhaften Eigenschaften einer strukturierten Hartchromschicht mit denen einer Feststoffpartikel enthaltenden Chromschicht. Bei einer Wiederholung der Schritte (b) und (c) werden die Risse im nachfolgenden Abscheidungsschritt verschlossen und es wird eine weitere Lage einer mikrorissigen Chromschicht abgeschieden, deren Risse anschließend wieder aufgeweitet und mit Partikeln gefüllt werden.

Unter dem Ausdruck "Elektrolyt" im Sinne der vorliegenden Erfindung werden wäßrige Lösungen verstanden, deren elektrische Leitfähigkeit durch elektrolytische Dissoziation von Bestandteilende Elektrolyten in Ionen zustande kommt. Demzufolge weist der Elektrolyt neben den oben genannten Komponenten und gegebenenfalls weiter vorliegende Zusatzstoffen als Rest Wasser auf.

Die vorstehend angegebenen Mengen der einzelnen Komponenten des Elektrolyten beziehen sich auf den Elektrolyten. Erfindungsgemäß wird eine Cr(VI)-Verbindung eingesetzt. Aus Cr(VI)-Verbindungen abgeschiedene elektrolytische Chromschichten weisen im Gegensatz zu aus dreiwertigen Cr-Elektrolyten gebildeten Chromschichten mehr Gitterdefekte auf, da aus einem sechswertigen Chromelektrolyten gebildetes Chrom neben kubisch raumzentriertem Chrom einen größeren Anteil hexagonales Chromhydrid enthält, was auf eine Wasserstoffbildung bei der galvanischen Abscheidung zurückzuführen ist. Dies führt zu einer größeren Anzahl und Dichte von Gitterdefekten und so auch zu einer größeren Härte des abgeschiedenen Chroms. Eine niedrige Stromausbeute verstärkt diesen Effekt. Als Cr(VI)-Verbindung wird vorzugsweise CrO₃ eingesetzt, das sich für die elektrolytische Abscheidung von Chrom als besonders günstig erwiesen hat.

Bevorzugt enthält der Elektrolyt eine Cr(VI)-Verbindung in einer Menge, die 150 - 300 g/l Chromsäureanhydrid entspricht. Bevorzugt ist es ferner, daß der Elektrolyt 2 - 6 g/l Schwefelsäure enthält. Die aliphatische Sulfonsäure mit 1 - 6 Kohlenstoffatomen ist in dem Elektrolyten bevorzugt in einer Menge von 6 - 16 g/l enthalten. Bevorzugt sind aliphatische Sulfonsäuren mit 1 - 4 Kohlenstoffatomen und unter diesen sind Methansulfonsäure, Ethansulfonsäure, Methandisulfonsäure und/oder Ethandisulfonsäure besonders bevorzugt. Am meisten bevorzugt ist Methansulfonsäure.

Der erfindungsgemäße Elektrolyt enthält weniger als 0,5 g/l (Gramm pro Liter) anorganische Fluoridverbindungen, da diese die Ausbildung der Struktur der erfindungsgemäßen Schicht stören. Unter anorganischen Fluoridverbindungen werden im Sinne der Erfindung Fluoridverbindungen verstanden, die in wäßrigen Medien teilweise oder vollständig in einfache Fluoridionen (F⁻) oder komplexe Fluoridionen (z.B. HF₂⁻, BF₄⁻, SiF₆²⁻ etc.) dissoziieren können, insbesondere Fluoridsalze und Fluorid enthaltende anorganische Säuren, wie z.B. HF, HBF₄, H₂SiF₆ und deren Salze, z.B. M'F, M^{I}BF₄, M^{I}₂SiF₆, M^{II}F₂, M^{II}(BF₄)₂, M^{II}SiF₆, worin M^{I} für Alkaliionen (Li⁺, Na⁺, K⁺, Rb⁺, Cs⁺) und M" für Erdalkalüonen (Be²⁺, Mg²⁺, Ca²⁺, Sr²⁺, Ba²⁺) stehen. Bevorzugt enthält der Elektrolyt weniger als 0,25 g/l anorganische Fluoridverbindungen, besonders bevorzugt weniger als 0,1 g/l und am meisten bevorzugt weniger als 0,05 g/l anorganische Fluoridverbindungen.

Der Elektrolyt kann weiterhin übliche Elektrolysehilfsmittel und Katalysatoren enthalten, die die Chromabscheidung unterstützen. Diese können in üblichen Mengen im Elektrolyten vorliegen.

Die Stromdichte im Abscheidungsschritt (b) beträgt 20 - 100 A/dm², bevorzugt 30 - 80 A/dm². Je höher die gewählte Stromdichte im erfindungsgemäßen Verfahren, desto dichter wird die Strukturierung, d.h. desto dichter und raumgreifender werden die Vertiefungen der strukturierten Chrom-Feststoffpartikel-Schicht. Während des Umpolungsschritts (c) wird bevorzugt mit einer Stromdichte von 5 - 100 A/dm², besonders bevorzugt mit einer Stromdichte von 20 - 80 A/dm² gearbeitet. Die Temperatur kann während des erfindungsgemäßen Verfahrens 45 - 95°C, bevorzugt 50 - 90°C, besonders bevorzugt 60 - 80°C betragen.

Die Zeitdauer der Abscheidung wird in Abhängigkeit von der gewünschten Dicke der strukturierten Chrom-Feststoffpartikel-Schicht gewählt, wobei die Schicht um so dicker wird, je höher die Stromdichte und die Stromausbeute sind, je länger die Abscheidung erfolgt und je häufiger die Schritte (b) und (c) wiederholt werden. Der Abscheidungsschritt (b) wird bevorzugt für 5 - 240 Minuten durchgeführt. Der Umpolungsschritt (c) wird vorteilhafterweise für 5 - 600 s (Sekunden) durchgeführt, abhängig von der Stromdichte im Schritt (c) und der gewünschten Aufweitung der Risse. Bevorzugt wird der Umpolungsschritt für 10 - 300 s durchgeführt, besonders bevorzugt sind 30 - 90 s.

Ein weiterer wichtiger Verfahrensparameter des erfindungsgemäßen Verfahrens ist die Stromausbeute. Bei einer elektrolytischen Abscheidung geht regelmäßig nur ein Teil der eingesetzten Strommenge in die Metallabscheidung, der Rest der Strommenge führt zu Verlusten, wobei vornehmlich Wasserstoff erzeugt wird. Unter der kathodischen Stromausbeute, auch als Wirkungsgrad bezeichnet, wird das Verhältnis der zur Metallabscheidung führenden Strommenge zur eingesetzten Strommenge verstanden. Werden beispielsweise 100 Ah eingesetzt, von denen 25 Ah zur Metallabscheidung führen und 75 Ah Verluste vorliegen, beträgt die kathodische Stromausbeute 25%.

Die Stromausbeute wird im Stand der Technik regelmäßig in Richtung einer möglichst hohen Stromausbeute optimiert, um einen hohen Wirkungsgrad zu erreichen. Die Stromausbeute bei der Abscheidung elektrolytischer Chromschichten beträgt im Stand der Technik üblicherweise über etwa 15 %, häufig auch über 20 %. Im erfindungsgemäßen Verfahren hat sich hingegen eine niedrige Stromausbeute als für die Strukturausbildung der erfindungsgemäßen Schicht notwendig erwiesen. Die kathodische Stromausbeute beträgt erfindungsgemäß 12 % oder weniger. Ist die Stromausbeute höher, wird die gewünschte Strukturierung der Hartchromschicht nicht erhalten. Die Stromausbeute des erfindungsgemäßen Verfahrens beträgt bevorzugt 8 -12 %.

Die Chrom-Feststoffpartikel-Schicht selbst kann aus mehreren Schichten bestehen, die nacheinander aufgebracht werden, indem der Abscheidungsschritt (b) und der Umpolungsschritt (c) wiederholt werden. Wenn mehrere Schichten aufgebracht und Partikel jeweils in die Risse der einzelnen Schichten eingebracht werden, so kann eine Beschichtung erreicht werden, die eine bessere Verteilung der Feststoffpartikel in der Beschichtung sowohl in deren gesamter Dicke, als auch über deren Fläche hinweg aufweist, da die Risse nicht immer an denselben Stellen gebildet werden.

Um eine möglichst gleichmäßige Verteilung der Risse und damit der Feststoffpartikel in der erfindungsgemäßen Schicht zu erreichen, werden die Schritte (b) und (c) daher wiederholt, wobei sich je nach Anwendungszweck und Dicke der gewünschten strukturierten Chrom-Feststoffpartikel-Schicht 1 - 100 Wiederholungen, d.h. 2 - 101 Zyklen der Schritte (b) und (c) als günstig erwiesen haben. Die gesamte strukturierte Chrom-Feststoffpartikel-Schicht hat je nach Einsatzzweck eine Schichtdicke von etwa 20 - 800 µm. Bevorzugt sind Schichtdicken von 30 - 500 µm, besonders bevorzugt sind 50 - 300 µm.

In einer bevorzugten Ausführungsform des erfindungsgemäßen Verfahrens schließt das Verfahren mit einem Schritt der elektrolytischen Abscheidung von Chrom ab, um die im letzten Umpolungsschritt (c) aufgeweiteten und mit Feststoffpartikeln gefüllten Mikrorisse wieder zu verschließen und die Feststoffpartikel so zu fixieren. Besonders bevorzugt ist es, daß zum Schluß des Verfahrens nach dem Schritt (c) zusätzlich der Schritt (b) wiederholt wird. Dieses Verfahren zur Herstellung einer strukturierten Chrom-Feststoffpartikel-Schicht umfaßt daher die Schritte, daß
(a) ein Maschinenelement in einen Elektrolyt eingebracht wird, der
   eine Cr(VI)-Verbindung in einer Menge, die 100 g/l - 400 g/l Chromsäureanhydrid entspricht,
   1 - 8 g/l Schwefelsäure,
   5 -18 g/l aliphatische Sulfonsäure mit 1 - 6 Kohlenstoffatomen,
   Feststoffpartikel mit einer Größe von 0,01 - 10 µm und
   weniger als 0,5 g/l anorganische Fluoridverbindungen enthält,
(b) auf das Maschinenelement elektrolytisch eine Chrom enthaltende Schicht abgeschieden wird, bei einer Stromdichte von 20 - 100 A/dm² und einer Stromausbeute von 12 % oder weniger, anschließend
(c) die Stromrichtung umgekehrt wird, wobei sich die Feststoffpartikel in Mikrorisse der Schicht einlagern,
   die Schritte (b) und (c) gegebenenfalls wiederholt werden, und anschließend
   der Schritt (b) wiederholt wird.

Wie oben beschrieben wird das zu verchromende Werkstück bei der Elektrolyse kathodisch geschaltet. Im Abscheidungsschritt (b) wird an der Kathode Wasserstoff gebildet, es findet die Metallabscheidung statt und es wird Cr(VI) zu Cr(III) reduziert. An der Anode wiederum bildet sich Sauerstoff und es findet eine Oxidation von Cr(III) zu Cr(VI) statt. Diese Oxidation von Cr(III) zu Cr(VI) findet insbesondere an einer PbO₂-Oberflächenschicht der Anode statt und es bildet sich ein bestimmtes Cr(III)/Cr(VI)-Verhältnis, das abhängig von einer Reihe von Parametern des Verfahrens ist, insbesondere von der Zusammensetzung und Konzentration des Elektrolyten, der Stromdichte und dem Flächenverhältnis von Anode zu Kathode (Werkstück). Beispielsweise kann bei sonst unveränderten Bedingungen eine Anode mit größerer Oberfläche zu einem kleineren Cr(III)-Gehalt führen. Der Verchromungselektrolyt wird in der Regel mehrfach eingesetzt. Um gleich zu Beginn des Verfahrens mit einem frisch angesetzten Elektrolyten über einen gewissen Cr(III)-Gehalt zu verfügen, kann dem Elektrolyten ein Reduktionsmittel zugesetzt werden, beispielsweise Saccharose.

Für das erfindungsgemäße Verfahren hat es sich als besonders günstig für eine schnelle und auf dem Werkstück gleichmäßige Abscheidung der strukturierten Chrom-Feststoffpartikel-Schicht erwiesen, wenn der Elektrolyt Cr(III) in einer Menge enthält, die 4 - 16 g/l Cr₂O₃ entspricht. Darüber hinaus ist der Prozeß so insgesamt stabiler. Besonders bevorzugt enthält der Elektrolyt Cr(III) in einer Menge, die 8 - 12 g/l Cr₂O₃ entspricht.

Zur Erzielung einer hohen Verschleißbeständigkeit werden als Feststoffpartikel bevorzugt Hartstoffpartikel eingesetzt. Unter Hartstoffpartikeln werden im Sinne der Erfindung Partikel aus Materialien verstanden, die eine Mohs-Härte von 9 oder höher aufweisen. Unter diesen sind Hartstoffpartikel mit einer Mohs-Härte von 9,2 - 10 bevorzugt und solche mit einer Mohs-Härte von 9,4 - 10 besonders bevorzugt. Die Mohs-Härte wird nach der im Stand der Technik bekannten Härteprüfung nach Mohs bestimmt.

Bevorzugte Hartstoffpartikel sind solche aus Wolframkarbid, Chromkarbid, Aluminiumoxid, Siliziumkarbid, Siliziumnitrid, Borkarbid, kubischem Bornitrid und/oder Diamant.

Die Menge an Feststoffpartikeln, die in dem Elektrolyten im erfindungsgemäßen Verfahren enthalten ist, kann in weiten Bereichen variiert werden. Dabei hat es sich als vorteilhaft erwiesen, daß in dem Elektrolyten 0,1 - 200 g/l Feststoffpartikel enthalten sind. Besonders bevorzugt sind 0,5 - 50 g/l Feststoffpartikel und am meisten bevorzugt sind 1 - 20 g/l Feststoffpartikel in dem Elektrolyten enthalten.

Die Korngröße der Feststoffpartikel liegt im Bereich von 0,01 bis 10 µm, bevorzugt im Bereich von 0,01 - 8 µm. Besonders bevorzugt sind Feststoffpartikel mit einer Korngröße im Bereich von 0,1 - 5 µm, und am meisten bevorzugt beträgt die Korngröße 0,25 - 2 µm. Bevorzugt liegen über 90 %, besonders bevorzugt über 95 % der im Elektrolyten enthaltenen Feststoffpartikel innerhalb der vorgenannten Grenzen.

Die im Schritt (c) des Verfahrens erzeugte Spaltbreite der Risse sollte größer als die Partikelgröße sein und liegt bevorzugt über 0,02 µm, besonders bevorzugt über 0,05 µm und am meisten bevorzugt über 0,1 µm.

Besonders bevorzugt ist es, als Feststoffpartikel Diamanten, Aluminiumoxid- und/oder Siliziumnitrid-Partikel einzusetzen. Die bevorzugte Größe von Diamantpartikeln beträgt 0,25 - 0,45 µm. Die bevorzugte Größe von Aluminiumoxid- und Siliziumnitrid-Partikeln beträgt 0,1 - 5 µm.

Eingelagerte Diamantpartikel besitzen den Vorteil, daß sie bei hohen thermischen Belastungen, wie sie beispielsweise bei Kolbenringen auftreten können, zu besonders guten Gleiteigenschaften führen. Diamant wandelt sich bei höheren Temperaturen in Graphit um und beim Zusammentreffen von hohen Drücken und einer Mangelschmierung kann die Temperatur beispielsweise der Kolbenringlauffläche so hoch werden, daß eine Brandspurbildung auftritt. Unter diesen Bedingungen wandeln sich dann die Diamantpartikel vorteilhafterweise in Graphit um, der dann Schmieraufgaben übernimmt und so eine Brandspurbildung verhindert. Neben den guten Notlaufeigenschaften bei Mangelschmierung, die auf die Mikrostrukturierung zurückzuführen ist, werden auf diese Weise zusätzliche Notlaufeigenschaften bei hohen Temperaturen von etwa 700°C oder höher erreicht.

Eingelagerte Diamantpartikel können aus mono- und/oder polykristallinem Diamant gebildet sein. Mit polykristallinem Diamant werden häufig die besseren Ergebnisse erzielt, da ein polykristalliner Diamant aufgrund der vielen verschiedenen Kristalle viele Gleitebenen aufweist. Als Feststoffpartikel oder Hartstoffpartikel können auch Mischungen von Feststoffpartikeln oder Hartstoffpartikeln verschiedener Art und/oder Größe eingesetzt werden.

Weiter können in der Chrom-Feststoffpartikel-Schicht in den Rissen Festschmierstoffpartikel, Feststoffpartikel zur Erhöhung der Duktilität und/oder der Korrosionsfestigkeit enthalten sein. Durch die Einlagerung weiterer Partikel neben den Hartstoffpartikeln kann die Schicht für die jeweilige Anwendung noch angepaßt werden. So können als Festschmierstoffteilchen beispielsweise hexagonales Bornitrid, Graphit und/oder Polymerteilchen, insbesondere aus Polyethylen und/oder Polytetrafluorethylen, zusätzlich in die Risse eingebracht werden. Zur Erhöhung der Duktilität können duktile Metalle oder Metalllegierungen aus Zinn, Titan oder Aluminium eingelagert sein.

Unter einer strukturierten Chrom-Feststoffpartikel-Schicht werden im Sinne der Erfindung nicht nur Schichten aus reinem Chrom und Feststoffpartikeln verstanden, sondern auch Schichten aus Chromlegierungen, insbesondere mit Molybdän, Vanadium und Zirkonium. Die Erfindung betrifft somit auch strukturierte Chromlegierungs-Feststoffpartikel-Schichten. Soll die strukturierte Chrom-Feststoffpartikel-Schicht nicht aus reinem Chrom, sondern aus einer Legierung gebildet sein, werden die Legierungselemente in dem Verchromungselektrolyten als Salze gelöst und zusammen mit dem Chrom in Form einer Chromlegierung galvanisch abgeschieden. Dabei sind die Legierungselemente bevorzugt in Mengen von 0,1 - 30 Gew.-% (Gewichtsprozent), besonders bevorzugt 0,5 - 15 Gew.-% in der Chromschicht vorhanden. Solche Schichten sind gegenüber reinen Chromschichten häufig noch verschleißfester.

Zur Erzeugung von Chrom-Molybdän-, Chrom-Vanadium- und/oder Chrom-Zirkonium-Legierungsschichten, die Feststoffpartikel enthalten und strukturiert sind, können in einer bevorzugten Ausführungsform in dem Elektrolyten als zusätzliche Komponente 10 g/l bis 200 g/l mindestens einer einen dichten Kathodenfilm ausbildenden Verbindung, ausgewählt unter Ammoniummolybdat, Alkalimolybdat, Erdalkalimolybdat, Ammoniumvanadat, Alkalivanadat, Erdalkalivanadat, Ammoniumzirkonat, Alkalizirkonat und Erdalkalizirkonat enthalten sein. Als Alkaliionen können Li⁺, Na⁺ und K⁺ eingesetzt werden. Beispiele für Erdalkalüonen sind Mg²⁺ und Ca²⁺ Die genannte Komponente bildet bei der elektrolytischen Abscheidung einen dichten Kathodenfilm aus, wie in der WO 2004/050960 beschrieben. In einer besonders bevorzugten Ausführungsform ist die Komponente (NH₄)₆Mo₇O₂₄·4 H₂O, das besonders günstig für die Ausbildung der strukturierten Chrom-Feststoffpartikel-Schicht ist.

Wenn eine nicht mit Molybdän, Vanadium oder Zirkonium legierte Chrom-Feststoffpartikel-Schicht hergestellt werden soll, enthält der Elektrolyt bevorzugt keine der oben genannten, einen dichten Kathodenfilm ausbildenden Verbindungen. In einer weiteren bevorzugten Ausführungsform enthält der Elektrolyt somit keine Verbindung ausgewählt unter Ammoniummolybdat, Alkalimolybdat, Erdalkalimolybdat, Ammoniumvanadat, Alkalivanadat, Erdalkalivanadat, Ammoniumzirkonat, Alkalizirkonat und Erdalkalizirkonat.

Besteht die strukturierte Chrom-Feststoffpartikel-Schicht aus mindestens zwei Schichten, so können die einzelnen Schichten verschieden hohe oder völlig unterschiedliche Legierungsbestandteile aufweisen. Dies kann je nach Anforderung an die Schicht beziehungsweise an das zu beschichtende Maschinenelement geeignet gewählt werden.

Wird die strukturierte Chrom-Feststoffpartikel-Schicht derart gebildet, daß die mindestens zwei Chromschichtlagen eine unterschiedliche Kristallstruktur aufweisen, so können die Festigkeitseigenschaften der Schicht noch weiter verbessert werden. Hierbei wird zur Herstellung mindestens einer Lage Hartchrom das Chrom aus dem Elektrolyten am kathodisch geschalteten Maschinenelement abgeschieden, so daß in der Chromlage entsprechend der Stromdichte mehrere Lagen Hartchrom mit unterschiedlicher Kristallisationsform abgeschieden werden. Nach jeweils einer Abscheidungsphase einer Lage wird das Maschinenelement anodisch geschaltet, so daß sich das Rißnetzwerk im Hartchrom aufweitet und mit den Feststoffpartikeln füllt. Hierbei werden die Schichten unterschiedlicher Kristallstruktur bevorzugt abwechselnd übereinander abgeschieden.

Die Erfindung betrifft weiter eine strukturierte Chrom-Feststoffpartikel-Schicht, erhältlich nach dem oben beschriebenen Verfahren.

Die erfindungsgemäße strukturierte Chrom-Feststoffpartikel-Schicht weist ein Rißnetzwerk auf, bei dem in die Risse Feststoffpartikel eingelagert sind, die Rißdichte 10 - 250 /mm beträgt, die Korngröße der Feststoffpartikel im Bereich von 0,01 - 10 µm liegt, der Anteil der Feststoffpartikel an der gesamten Schicht 1 - 30 Vol.% beträgt und die Chrom-Feststoffpartikel-Schicht Vertiefungen in der Oberfläche der Schicht aufweist, wobei der Oberflächenanteil der Vertiefungen 5 - 80 % beträgt.

Unter einer Mikrostrukturierung wird im Sinne der Erfindung eine mikroskopische Strukturierung verstanden, die im µm-Bereich liegt. Die Oberfläche umfaßt hervorstehende Bereiche (Oberflächentraganteil) und zurückliegende Bereiche (Vertiefungen, Täler). Im Gegensatz zu anderen aus dem Stand der Technik bekannten Strukturen, die einen kugeligen Aufbau mit ineinander übergehenden Kugeln aufweisen, kann die Struktur der erfindungsgemäßen Schicht als Struktur mit inselförmigen Vertiefungen umschrieben werden. Die Vertiefungen sind bevorzugt näpfchenförmig und/oder labyrinthartig und/oder säulenförmig ausgebildet. Diese Mikrostruktur hat sich als besonders verschleiß-, brandspur- und korrosionsbeständig erwiesen und zeigt eine hervorragende Schmiermittelhaltefähigkeit der Oberfläche, aus der hervorragende Gleit- und Notlaufeigenschaften resultieren. Die Schmiermittelhaltefähigkeit der Oberfläche wird dabei im wesentlichen durch die besondere Mikrostrukturierung verursacht, in deren Vertiefungen etwaiges Schmiermittel fixiert ist, und nicht durch das Rißnetzwerk der Schicht, da die Risse im Verlauf des Verfahrens geschlossen werden und so kein oder nur unwesentliche Mengen an Schmiermittel aufnehmen können.

Um eine hohe Verschleißbeständigkeit und Brandspurfestigkeit der erfindungsgemäßen Schicht zu erreichen, hat sich ein Anteil an Feststoffpartikeln in der Chrom-Feststoffpartikel-Schicht von 1 bis 30 Vol.% (Volumenprozent) als günstig erwiesen. Bevorzugt beträgt der Anteil der Feststoffpartikel in der Chrom-Feststoffpartikel-Schicht 1 - 20 Vol.-%, besonders bevorzugt 2 bis 10 Vol.-%, bezogen auf das Volumen der gesamten Chrom-Feststoffpartikel-Schicht.

Ferner hat es sich als günstig erwiesen, wenn die Rißdichte 10 - 250 /mm beträgt, da so eine vorteilhafte Verteilung der Feststoffpartikel in der erfindungsgemäßen Schicht erreicht wird. Die Rißdichte ist die Zahl der Risse, die eine Linie von 1 mm durchschnittlich schneidet. Besonders bevorzugt sind Rißdichten von 30 - 200 /mm und am meisten bevorzugt sind Rißdichten von 50 - 100 /mm. Bevorzugt erstreckt sich das Rißnetzwerk durch die gesamte erfindungsgemäße Chrom-Feststoffpartikel-Schicht.

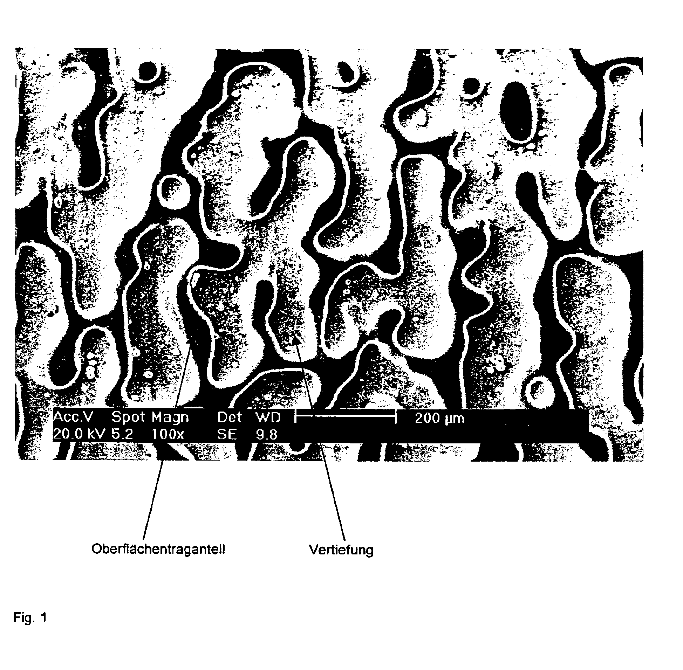

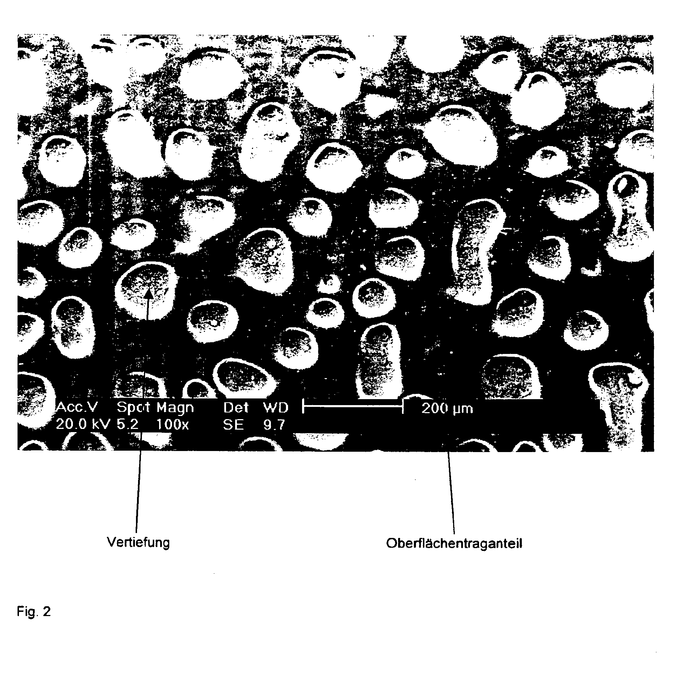

Der Oberflächenanteil der Vertiefungen beträgt erfindungsgemäß 5 - 80 %. Der Oberflächenanteil der Vertiefungen wird ermittelt in einer Draufsicht auf die Oberfläche der erfindungsgemäßen Schicht (vgl. Fig. 1-3) durch Bestimmung des Anteil der Oberfläche, der aus Vertiefungen besteht, bezogen auf die Gesamtoberfläche. Als besonders günstig haben sich Mikrostrukturen erwiesen, bei denen der Oberflächenanteil der Vertiefungen 10 - 70 %, insbesondere 15 - 60 %, beträgt. Ein erhöhter Oberflächenanteil der Vertiefungen kann durch eine größere Anzahl einzelner Vertiefungen pro Flächeneinheit der Oberfläche oder durch raumgreifendere einzelne Vertiefungen oder sich miteinander verbindende Vertiefungen entstehen. Bei sich verbindenden Vertiefungen entstehen labyrinthartige Strukturen, wie in Fig. 1 zu sehen. Die Gesamtoberfläche ist die Summe aus der Oberfläche der Vertiefungen und der Oberfläche des Traganteils (Oberflächentraganteils). Der Oberflächentraganteil beträgt dementsprechend 20 - 95 %, bevorzugt 30 - 90 % und besonders bevorzugt 40 - 85 %.

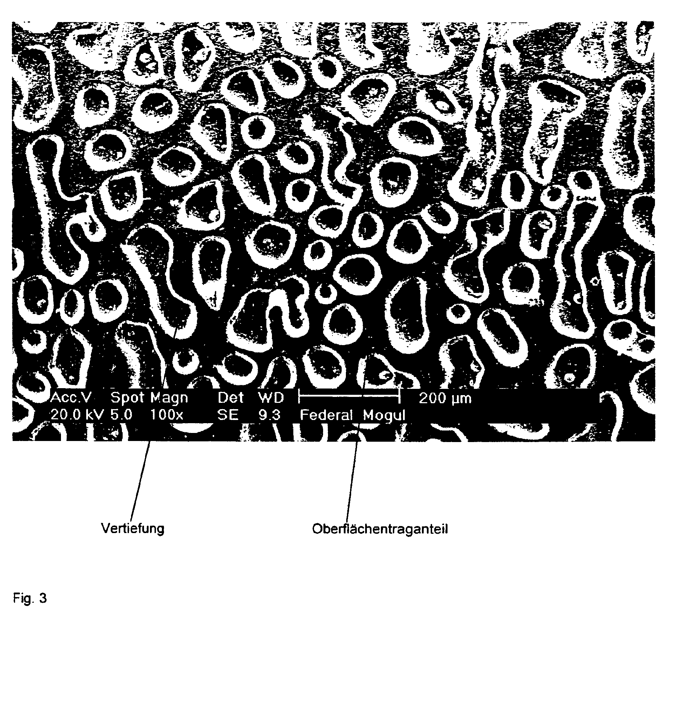

Die erfindungsgemäße Chrom-Feststoffpartikel-Schicht weist Strukturen im Mikrobereich auf. Die erfindungsgemäße Schicht weist pro Quadratmillimeter (mm²) Oberfläche durchschnittlich 3 bis 100 Vertiefungen mit einer maximalen Ausdehnung von mehr als 30 µm auf. Die maximale Ausdehnung einer Vertiefung ist die maximale Größe einer Vertiefung, gemessen von Rand zu Rand einer Vertiefung, wobei der Rand einer Vertiefung der Übergang des hervorstehenden Bereichs zu dem zurückliegenden Bereich (Vertiefung) ist. In den Figuren 1-3 ist dieser Übergang an der hellen Färbung zu erkennen. Beispielsweise würde eine Vertiefung mit einer Ausdehnung (Größe) von 10 µm Breite und 40 µm Länge unter die obige Definition von Vertiefungen mit einer maximalen Ausdehnung von mehr als 30 µm fallen, wohingegen eine Vertiefung mit einer Breite von 20 µm und einer Länge von 20 µm nicht unter diese Definition fiele. Bei labyrinthartigen Strukturen, wie sie in der Fig. 3 gezeigt sind, wird die maximale Ausdehnung über eine gerade Linie von einem Ende zum anderen Ende der labyrinthartigen Vertiefung gemessen.

Bevorzugt beträgt die durchschnittliche Anzahl der Vertiefungen mit einer maximalen Ausdehnung von mehr als 30 µm 5 - 90 /mm² Oberfläche, besonders bevorzugt 8 - 80/mm² Oberfläche und am meisten bevorzugt 12 - 60 /mm² Oberfläche. Weiter ist es bevorzugt, daß der Oberflächenanteil der Vertiefungen mit einer maximalen Ausdehnung von mehr als 30 µm 5 - 80 % beträgt, bezogen auf die Gesamtoberfläche der strukturierten Chrom-Feststoffpartikel-Schicht. Besonders bevorzugt beträgt der Oberflächenanteil der Vertiefungen mit einer maximalen Ausdehnung von mehr als 30 µm 10 - 70 %, insbesondere 15 - 60 %. Die Vertiefungen mit einer maximalen Ausdehnung von mehr als 30 µm weisen bevorzugt eine Tiefe von mehr als 3 µm, besonders bevorzugt von mehr als 5 µm und am meisten bevorzugt von mehr als 10 µm auf.

In einer bevorzugten Ausführungsform beträgt der durchschnittliche minimale Abstand benachbarter Vertiefungen 10 - 150 µm. Unter dem durchschnittlichen minimalen Abstand benachbarter Vertiefungen wird der Durchschnitt des geringsten Abstands zwischen benachbarten Vertiefungen verstanden. Der Abstand ist dabei die Strecke vom Rand einer Vertiefung zum Rand einer nächsten Vertiefung.

Das Rißnetzwerk der erfindungsgemäßen Schicht besteht aus Mikrorissen, worunter im Sinne der Erfindung mikroskopische Risse im nm- bis µm-Bereich verstanden werden, insbesondere Risse deren Spaltbreite im Bereich von etwa 0,01 - 20 µm liegt.

Durch elektrolytisches oder chemisches Ätzen der erfindungsgemäßen Schicht kann auch ein Flächenanteil der Risse ermittelt werden. Da der Flächenanteil jedoch von der Intensität und Dauer des Ätzprozesses abhängt, kann der Flächenanteil der Risse in einem weiten Bereich variieren und beträgt in der Regel 2 - 30 %.

Weiter sind bei der erfindungsgemäßen strukturierten Chrom-Feststoffpartikel-Schicht die oben im Zusammenhang mit dem erfindungsgemäßen Verfahren beschriebenen geeigneten, bevorzugten und besonders bevorzugten Ausgestaltungen ebenfalls geeignet, bevorzugt und besonders bevorzugt.

Die Erfindung betrifft auch ein beschichtetes Maschinenelement, insbesondere einen Kolbenring, mit einer Oberfläche, umfassend eine auf die Oberfläche aufgebrachte strukturierte Chrom-Feststoffpartikel-Schicht. Bei dem beschichteten Maschinenelement sind die oben beschriebenen geeigneten, bevorzugten und besonders bevorzugten Ausgestaltungen der Erfindung ebenfalls geeignet, bevorzugt und besonders bevorzugt. Das erfindungsgemäße beschichtete Maschinenelement weist die oben im Zusammenhang mit der erfindungsgemäßen strukturierten Chrom-Feststoffpartikel-Schicht beschriebenen Vorteile auf.

Die strukturierte Chrom-Feststoffpartikel-Schicht der vorliegenden Erfindung kann unmittelbar auf ein Maschinenelement aufgebracht werden oder auf eine oder mehrere Schichten, die zuvor auf das Maschinenelement aufgebracht wurden.

Unter einer "auf" einer Oberfläche oder einer Schicht aufgebrachten Schicht wird im Sinne der Erfindung sowohl eine unmittelbar auf die Oberfläche oder die Schicht aufgebrachte Schicht als auch eine auf eine Zwischenschicht aufgebracht Schicht verstanden. Eine "auf" eine Schicht A aufgebrachte Schicht C liegt somit sowohl bei einem Schichtaufbau A, C vor als auch bei einem Schichtaufbau A, B, C, wobei B die Zwischenschicht und A die dem Maschinenelement zugewandte Schicht ist.

Unter der erfindungsgemäßen strukturierten Chrom-Feststoffpartikel-Schicht kann sich beispielsweise eine übliche Chromschicht, eine strukturierte Hartchromschicht (ohne Feststoffpartikel) oder eine nicht strukturierte Chrom-Feststoffpartikel-Schicht befinden. Als strukturierte Hartchromschicht kann eine beispielsweise in der WO 2004/050960 A1 oder der WO 2005/108648 A2 beschriebene strukturierte Hartchromschicht und als nicht strukturierte Chrom-Feststoffpartikel-Schicht eine in der EP 0217126 A1 oder der WO 2001/004386 A1 beschriebene Schicht aufgebracht werden.

Auf die erfindungsgemäße strukturierte Chrom-Feststoffpartikel-Schicht können eine oder mehrere Schichten aufgebracht werden. Hierzu kommen auch die oben beschriebenen Schichten in Betracht, insbesondere eine partikelfreie strukturierte Hartchromschicht und eine nicht strukturierte Chrom-Feststoffpartikel-Schicht.

Auf die erfindungsgemäße strukturierte Chrom-Feststoffpartikel-Schicht kann eine Einlaufschicht aufgebracht werden, die das Einlaufen des Maschinenelements erleichtert. Dies ist insbesondere bei der Verwendung der erfindungsgemäßen Schicht auf Kolbenringen bevorzugt, da so die Einlaufphase der Kolbenringe verkürzt und der Ölverbrauch sowie Emissionen während der Einlaufzeit des Motors reduziert werden können.

Besonders bevorzugte Einlaufschichten sind PVD- und CVD-Schichten.

Unter einer PVD-Schicht wird im Sinne der Erfindung eine durch PVD (Physical Vapor Deposition) abgeschiedene Schicht auf einem Maschinenelement verstanden. PVD-Verfahren sind dem Fachmann an sich bekannt. Dabei wird das Schichtausgangsmaterial durch Laser-, Ionen- oder Elektronenstrahlen oder durch Lichtbogenentladung, meist unter vermindertem Druck bei etwa 1-1000 Pa, verdampft und die PVD-Schicht durch Kondensation des Materialdampfes auf dem Substrat ausgebildet. Bei Bedarf kann auch ein geeignetes Prozeßgas zugeführt werden.

Unter einer CVD-Schicht wird im Sinne der Erfindung eine durch CVD (Chemical Vapor Deposition) auf einem Maschinenelement abgeschiedene Schicht verstanden. CVD-Verfahren sind dem Fachmann an sich bekannt. Bei einem CVD-Verfahren wird ein Feststoff aus der Gasphase an der erhitzten Oberfläche eines Substrats durch eine chemische Reaktion abgeschieden. In der Regel werden auch CVD-Verfahren unter vermindertem Druck bei etwa 1-1000 Pa durchgeführt.

Als PVD- oder CVD-Schichten eignen sich erfindungsgemäß alle durch PVD- oder CVD-Verfahren erhältlichen Beschichtungen. Bevorzugte PVD- oder CVD-Schichten sind DLC (Diamant like Carbon)-Schichten. Dies sind durch PVD- oder CVD-Verfahren aus einem kohlenstoffhaltigen Gas abscheidbare Schichten aus amorphem Kohlenstoff. Diese lassen sich insbesondere durch PVD- oder PECVD-Methoden (Plasma enhanced chemical Vapor Deposition) abscheiden. Weiter bevorzugt umfassen die PVD- oder CVD-Schichten Titannitridverbindungen oder Chromnitridverbindungen, insbesondere Titannitride der Formel TiNₓ, Titannitridverbindungen der Formel TiNₓA_{y}, Chromnitride der Formel CrNₓ und Chromnitridverbindungen der Formel CrNₓA_{y}, worin A für Kohlenstoff (C), Bor (B), Sauerstoff (O) und/oder Hartstoffe bildende Elemente wie beispielsweise Silicium (Si), Vanadium (V), Niob (Nb), Wolfram (W), Aluminium (Al), Tantal (Ta), Zirkonium (Zr) etc. steht und x und y unabhängig voneinander 0,1 bis 1,5 betragen. Bevorzugt sind x und y unabhängig voneinander 0,3-1,2, besonders bevorzugt 0,5 bis 1. Beispielsweise lassen sich Titannitrid (TiNₓ), Titancarbonitrid (TiC_{y}Nₓ), Titanoxidnitrid (TiO_{y}Nₓ), Titanaluminiumnitrid (TiAl_{y}Nₓ), Chromnitrid (CrNₓ), Chromcarbonitrid (CrC_{y}Nₓ), Chromoxidnitrid (CrO_{y}Nₓ), Chromaluminiumnitrid (CrAl_{y}Nₓ) oder auch mehrelementige Verbindungen wie beispielsweise Chromaluminiumsiliciumnitride, Chromaluminiumzirkoniumnitride oder Chromaluminiumsiliciumzirkoniumnitride einsetzen, insbesondere solche der Formeln CrAlₐSi_{b}Nₓ, CrAlₐZr_{b}Nₓ oder CrAlₐSi_{b}Zr_{c}Nₓ, worin a, b, c und x unabhängig voneinander 0,1 bis 1,5, bevorzugt 0,1-1,2, besonders bevorzugt 0,2-1 betragen. Besonders bevorzugt werden in der erfindungsgemäßen Mehrschichtenanordnung als PVD-oder CVD-Schicht Chromnitridverbindungen eingesetzt, die die oben angegebenen weiteren Elemente enthalten können. Besonders bevorzugt besteht die PVD- oder CVD-Schicht aus den oben genannten Verbindungen.

Die Schichtdicke der PVD- oder CVD-Schicht beträgt bevorzugt 5-80 µm, besonders bevorzugt 5-60 µm, noch weiter bevorzugt 5-40 µm und am meisten bevorzugt 10-30 µm. Da die PVD-oder CVD-Schicht auf eine strukturierte Schicht aufgebracht ist, wird im Sinne der Erfindung unter einer PVD- oder CVD-Schicht auch ein abgeschiedenes PVD- oder CVD-Material verstanden, das die Vertiefungen der darunter liegenden strukturierten Schicht ganz oder teilweise füllt und dabei die darüberliegende strukturierte Schicht vollständig bedeckt oder nur teilweise bedeckt oder lediglich die Vertiefungen der darunterliegenden strukturierten Schicht ganz oder teilweise füllt, ohne eine durchgängige Schicht im Sinne einer vollständigen Bedeckung zu bilden. Die Schichtdicke ist im zuletzt genannten Fall der Mittelwert aus der Höhe der Füllung der Vertiefungen.

Besonders bevorzugt ist eine mindestens zweilagige Beschichtung, die die erfindungsgemäße strukturierte Chrom-Feststoffpartikel-Schicht und darauf eine Einlaufschicht umfaßt.

Nach dem Einlaufen einer solchen mindestens zweilagigen Beschichtung wird die Oberfläche von den Erhebungen der strukturierten Chrom-Feststoffpartikel-Schicht und den Feststoffpartikeln sowie den in den Vertiefungen der Strukturierung verbleibenden Einlaufschicht gebildet und so besonders vorteilhafte Eigenschaften der dann eingelaufenen Schicht erreicht.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die nachfolgenden Beispiele erläutern die Erfindung.

### Beispiel 1:

Es wird ein Chrom-Elektrolyt folgender Grundzusammensetzung hergestellt:

| | |
|---|---|
| Chromsäureanhydrid | 200 g/l |
| Schwefelsäure | 3,0 g/l |
| Methansulfonsäure | 9,5 g/l |
| Diamantpartikel | 50 g/l (polykristallin, Größe von 0,25 - 0,45 µm) |

Ein Kolbenring wird nach üblicher Vorbehandlung in den Elektrolyten eingetaucht und bei 70°C folgendem Stromprogramm unterworfen:

| | | | |
|---|---|---|---|
| Schritt 1 | 1 min | 100 A/dm² | (kathodische Schaltung) |
| Schritt 2 | 20 min | 70 A/dm² | (kathodische Schaltung) |
| Schritt 3 | 1 min | 60 A/dm² | (anodische Schaltung) |
| Schritt 4 | 5 min | 100 A/dm² | (kathodische Schaltung) |

Die Stromausbeute beträgt 11 % in den Schritten 1 und 4 und 9,5 % im Schritt 2. Der Cr(III)-Gehalt entspricht 10 g/l Cr₂O₃. Die Schritte 2 und 3 werden fünfmal wiederholt.

### Beispiel 2:

Es wird ein Chrom-Elektrolyt folgender Grundzusammensetzung hergestellt:

| | |
|---|---|
| Chromsäureanhydrid | 300 g/l |
| Schwefelsäure | 6,0 g/l |
| Methansulfonsäure | 14 g/l |
| Diamantpartikel | 50 g/l (polykristallin, Größe von 0,25 - 0,45 µm) |

Nach üblicher Vorbehandlung werden Kolbenringe in den Elektrolyten eingetaucht und bei 70°C folgendem Stromprogramm unterworfen:

| | | | |
|---|---|---|---|
| Schritt 1 | 40 min | 40 A/dm² | (kathodische Schaltung) |
| Schritt 2 | 3 min | 15 A/dm² | (anodische Schaltung) |
| Schritt 3 | 40 min | 40 A/dm² | (kathodische Schaltung) |

Die Stromausbeute in den Schritten 1 und 3 beträgt 8 %. Der Cr(III)-Gehalt entspricht 9 g/l Cr₂O₃. Die Schritte 1 und 2 werden fünfmal wiederholt.

### Vergleichsbeispiel 1:

Herstellung einer strukturierten Hartchromschicht gemäß der WO 2004/050960 A1.

Ein Chromelektrolyt folgender Zusammensetzung wird hergestellt:

| | |
|---|---|
| Chromsäureanhydrid CrO₃ | 250 g/l |
| Schwefelsäure H₂SO₄ | 2.5 g/l |
| Methansulfonsäure | 4 g/l |
| (NH₄)₆ Mo₇O₂₄ · 4H₂O | 100 g/l. |

Ein Kolbenring wird nach üblicher Vorbehandlung in den Elektrolyten eingebracht und bei 55°C mit 40 A/dm² für 30 min mit einer kathodischen Stromausbeute von 8,5 % beschichtet.

Der Kolbenring weist nach der Behandlung eine strukturierte Chromschicht auf. Diese Chromschicht ist auf den hervorstehenden Oberflächenbereichen (Traganteil) glänzend und in den Vertiefungen der Struktur befindet sich braunfarbener Kathodenfilm.

### Vergleichsbeispiel 2:

Beschichtung mit einer unstrukturierten Chrom-Diamant-Schicht gemäß der WO 2001/004386 A1.

Ein Kolbenring wird in einem rißbildenden Elektrolyten eingetaucht der folgende Bestandteile enthält:
250 g/l CrO₃ Chromsäure
1,5 g/l H₂SO₄ Schwefelsäure
10 g/l K₂SiF₆ Kaliumhexafluorosilikat

In ihm werden durch Rühren 50 g/l monokristalline Diamantpartikel mit einer durchschnittlichen Korngröße von 0,2 bis 0,4 µm dispergiert und während des Verchromens in der Schwebe gehalten. Das Verchromen erfolgt bei einer Temperatur von 60°C. Dabei wird der zu verchromende Kolbenring zunächst in einer ersten Stufe kathodisch geschaltet und während 8 Minuten bei einer Stromdichte von 65 A/dm³ und einer Stromausbeute von 23 % verchromt. In einer zweiten Stufe wird umgepolt und durch anodische Schaltung des Maschinenelementes während einer Minute bei einer Stromdichte von 60 A/dm³ das Rißnetzwerk der vorher abgeschiedenen Chromschicht aufgeweitet und mit Diamantpartikeln gefüllt. Dieser Zyklus, nämlich 8 min lang kathodisches Verchromen und 1 min lang anodisches Ätzen, wird insgesamt fünfmal wiederholt.

### Vergleichsbeispiel 3:

Strukturierte Hartchromschicht mit darüber angeordneter Chrom-Diamantpartikel-Schicht

Nach der obigen Vorschrift gemäß Vergleichsbeispiel 1 wird ein Kolbenring zunächst mit einer strukturierten Hartchromschicht und anschließend nach der obigen Vorschrift gemäß Vergleichsbeispiel 2 mit einer unstrukturierten Chrom-Diamantpartikel-Schicht versehen. Die Chrom-Diamantpartikel-Schicht nimmt teilweise die Struktur der darunterliegenden Hartchromschicht an.

Anschließend wurden die Brandspurbeständigkeit (Brandspurfestigkeit), die Verschleißbeständigkeit und die Gleitfähigkeit der entsprechend beschichteten Kolbenringe bestimmt. Dazu wurden die Kolbenringe unter motorischen Bedingungen auf einem Motorenprüfstand 1000 Stunden in einem 6-Zylinder Turbodieselmotor unter Vollast laufen gelassen. Die Brandspur- und Verschleißbeständigkeiten wurden mit Hilfe von Simulations-Testmaschinen (Brandspurtester der Firma Plint und Verschleißtester der Firma Plint) bestimmt. Die Gleitfähigkeit wurde anhand der Topologie der Oberfläche der beschichteten Kolbenringe bewertet. In der Tabelle bedeutet ++ sehr gut, + gut und 0 durchschnittlich.

**Tabelle: Brandspurbeständigkeit, Verschleiß, Gleit- und Notlauffähigkeit beschichteter Kolbenringe**

| Beschichtung | Brandspurbeständigkeit | Verschleißbeständigkeit | Gleitfähigkeit |
|---|---|---|---|
| strukturierte Hartchromschicht (Vergleichsbeispiel 1) | 50 % | 25 % | ++ |
| unstrukturierte Chrom-Diamantpartikel-Schicht (Vergleichsbeispiel 2) | 75 % | 100 % | 0 |
| strukturierte Hartchromschicht + Chrom-Diamantpartikel-Schicht (Vergleichsbeispiel 3) | 75 % | 100 % | + |
| strukturierte Chrom-Diamantpartikel-Schicht (Beispiel 1) | 100 % | 100% | ++ |

Wie der obigen Tabelle entnommen werden kann, weist die erfindungsgemäße strukturierte Chrom-Diamantpartikel-Schicht gemäß Beispiel 1 den hervorragend geringen Verschleiß, d.h. die sehr gute Verschleißbeständigkeit einer Chrom-Diamantpartikel-Schicht auf und zeigt darüber hinaus hervorragende Brandspurbeständigkeiten und die sehr gute Gleitfähigkeit einer strukturierten Hartchromschicht.

## Patentansprüche

1. Strukturierte Chrom-Feststoffpartikel-Schicht mit einem Rißnetzwerk, in das Feststoffpartikel eingelagert sind, **dadurch gekennzeichnet, daß** die Rißdichte 10 - 250 /mm beträgt, die Korngröße der Feststoffpartikel im Bereich von 0,01 - 10 µm liegt, der Anteil der Feststoffpartikel an der gesamten Schicht 1 - 30 Vol.% beträgt, die Chrom-Feststoffpartikel-Schicht eine Mikrostrukturierung mit Vertiefungen in der Oberfläche der Schicht aufweist, wobei der Oberflächenanteil der Vertiefungen 5 - 80 % beträgt und die Schicht pro mm² der Oberfläche durchschnittlich 3 bis 100 Vertiefungen mit einer maximalen Ausdehnung von mehr als 30 µm aufweist.

2. Strukturierte Chrom-Feststoffpartikel-Schicht gemäß Anspruch 1, **dadurch gekennzeichnet, daß** die Vertiefungen mit einer maximalen Ausdehnung von mehr als 30 µm, bezogen auf die Gesamtoberfläche, einen Oberflächenanteil von 5 - 80 % ausmachen und eine Tiefe von mehr als 5 µm aufweisen.

3. Strukturierte Chrom-Feststoffpartikel-Schicht gemäß Anspruch 1 oder 2, **dadurch gekennzeichnet, daß** die Feststoffpartikel Hartstoffpartikel mit einer Mohs-Härte von 9 oder höher sind.

4. Strukturierte Chrom-Feststoffpartikel-Schicht gemäß einem der Ansprüche 1 bis 3, **dadurch gekennzeichnet, daß** die Feststoffpartikel Diamantpartikel mit einer Größe von 0,25 - 0,45 µm sind.

5. Strukturierte Chrom-Feststoffpartikel-Schicht nach einem der Ansprüche 1 bis 4, **dadurch gekennzeichnet, daß** die Mikrostruktur der Oberfläche näpfchenförmig und/oder labyrinthartig und/oder säulenförmig ist.

6. Verfahren zur Herstellung einer strukturierten Chrom-Feststoffpartikel-Schicht, umfassend die Schritte, daß
(a) ein Maschinenelement in einen Elektrolyt eingebracht wird, der
eine Cr(VI)-Verbindung in einer Menge, die 100 g/l - 400 g/l Chromsäureanhydrid entspricht,
1 - 8 g/l Schwefelsäure,
5 -18 g/l aliphatische Sulfonsäure mit 1 - 6 Kohlenstoffatomen,
Feststoffpartikel mit einer Größe von 0,01 - 10 µm und
weniger als 0,5 g/l anorganische Fluoridverbindungen enthält,
(b) auf das Maschinenelement elektrolytisch eine Chrom enthaltende Schicht abgeschieden wird, bei einer Stromdichte von 20 - 100 A/dm² und einer Stromausbeute von 12 % oder weniger, anschließend
(c) die Stromrichtung umgekehrt wird, wobei sich die Feststoffpartikel in Mikrorisse der Schicht einlagern,
und die Schritte (b) und (c) gegebenenfalls wiederholt werden.

7. Verfahren gemäß Anspruch 6, **dadurch gekennzeichnet, daß** zum Schluß des Verfahrens zusätzlich nach dem Schritt (c) der Schritt (b) wiederholt wird.

8. Verfahren gemäß Anspruch 6 oder 7, **dadurch gekennzeichnet, daß** der Elektrolyt zusätzlich Cr(III) in einer Menge enthält, die 4 -16 g/l Cr₂O₃ entspricht.

9. Strukturierte Chrom-Feststoffpartikel-Schicht, erhältlich nach einem Verfahren gemäß einem der Ansprüche 6 bis 8.

10. Beschichtetes Maschinenelement, insbesondere Kolbenring, mit einer Oberfläche, umfassend eine auf die Oberfläche aufgebrachte strukturierte Chrom-Feststoffpartikel-Schicht gemäß einem der Ansprüche 1 - 5 oder 9, gegebenenfalls weiter umfassend mindestens eine Schicht, die unter der strukturierten Chrom-Feststoffpartikel-Schicht und/oder mindestens eine Schicht, die über der strukturierten Chrom-Feststoffpartikel-Schicht angeordnet ist.

## Claims

1. Structured chromium solid particles layer with a network of cracks in which solid particles are embedded, **characterized in that** the crack density is 10 - 250 /mm, the particle size of the solid particles is in the range of from 0.01 - 10 µm, the proportion of solid particles in the overall layer is 1 - 30 vol.-% and the chromium solid particles layer has a microstructure with depressions in the surface of the layer, wherein the proportion of the surface area accounted for by the depressions is 5 - 80 % and the layer has, per mm² of the surface area, an average of 3 to 100 depressions with a maximum extension of more than 30 µm.

2. Structured chromium solid particles layer according to claim 1, **characterized in that** the depressions with a maximum extension of more than 30 µm account for a proportion of the surface area of 5 - 80 % relative to the total surface area and are more than 5 µm deep.

3. Structured chromium solid particles layer according to claim 1 or 2, **characterized in that** the solid particles are hard material particles with a Mohs' hardness of 9 or higher.

4. Structured chromium solid particles layer according to one of claims 1 to 3, **characterized in that** the solid particles are diamond particles with a size from 0.25 - 0.45 µm.

5. Structured chromium solid particles layer according to one of claims 1 to 4, **characterized in that** the microstructure of the surface is cup-shaped and/or labyrinthine and/or columnar.

6. Method for the production of a structured chromium solid particles layer, comprising the steps that
(a) a machine element is introduced into an electrolyte which contains a Cr(VI) compound in a quantity which corresponds to 100 g/l - 400 g/l chromic anhydride,
1 - 8 g/l sulphuric acid,
5 -18 g/l aliphatic sulphonic acid with 1 - 6 carbon atoms,
solid particles with a size from 0.01 -10 µm and
less than 0.5 g/l inorganic fluoride compounds,
(b) a chromium-containing layer is electrolytically deposited on the machine element at a current density of 20 - 100 A/dm² and a current yield of 12 % or less, then
(c) the current direction is reversed, wherein the solid particles are embedded in microcracks of the layer,
and steps (b) and (c) are optionally repeated.

7. Method according to claim 6, **characterized in that** at the end of the method, additionally after step (c), step (b) is repeated.

8. Method according to claim 6 or 7, **characterized in that** the electrolyte additionally contains Cr(III) in a quantity which corresponds to 4 - 16 g/l Cr₂O₃.

9. Structured chromium solid particles layer, obtainable according to a method according to one of claims 6 to 8.

10. Coated machine element, in particular piston ring, with a surface comprising a structured chromium solid particles layer applied to the surface according to one of claims 1 - 5 or 9, optionally further comprising at least one layer arranged below the structured chromium solid particles layer and/or at least one layer arranged above the structured chromium solid particles layer.

## Revendications

1. Couche structurée de particules solides de chrome, comportant un réseau de fissures dans lequel des particules solides sont intercalées, **caractérisée en ce que** la densité des fissures est de 10-250 /mm, la granulométrie des particules solides est comprise dans la plage de 0,01-10 µm, la proportion des particules solides dans la totalité de la couche est de 1-30 % en volume, la couche de particules solides de chrome présente une microstructuration avec des renfoncements dans la surface de la couche, la proportion surfacique des renfoncements étant de 5-80 %, et la couche présentant par mm² de la surface en moyenne 3 à 100 renfoncements ayant une extension maximale supérieure à 30 µm.

2. Couche structurée de particules solides de chrome selon la revendication 1, **caractérisée en ce que** les renfoncements ayant une extension maximale supérieure à 30 µm représentent, par rapport à la surface totale, une proportion surfacique de 5-80 %, et présentent une profondeur supérieure à 5 µm.

3. Couche structurée de particules solides de chrome selon la revendication 1 ou 2, **caractérisée en ce que** les particules solides sont des particules d'une substance dure ayant une dureté Mohs de 9 ou plus.

4. Couche structurée de particules solides de chrome selon l'une des revendications 1 à 3, **caractérisée en ce que** les particules solides sont des particules de diamant ayant une granulométrie de 0,25-0,45 µm.

5. Couche structurée de particules solides de chrome selon l'une des revendications 1 à 4, **caractérisée en ce que** la microstructure de la surface est en forme de godets et/ou de type labyrinthique et/ou en forme de colonnes.

6. Procédé de fabrication d'une couche structurée de particules solides de chrome, comprenant les étapes selon lesquelles :
(a) un élément de machine est introduit dans un électrolyte, qui contient
un composé de Cr(VI) en une quantité qui correspond à 100-400 g/l d'anhydride chromique,
1-8 g/l d'acide sulfurique,
5-18 g/l d'un acide sulfonique aliphatique ayant 1-6 atomes de carbone,
des particules solides ayant une granulométrie de 0,01-10 µm, et
moins de 0,5 g/l de composés fluorures inorganiques,
(b) on dépose sur l'élément de machine par électrolyse une couche contenant du chrome, pour une densité de courant de 20-100 A/dm² et un rendement de courant de 12 % ou moins, puis
(c) on inverse le sens du courant, les particules solides venant s'intercaler dans les microfissures de la couche,
et éventuellement on répète les étapes (b) et (c).

7. Procédé selon la revendication 6, **caractérisé en ce que**, pour terminer le procédé, on répète en outre l'étape (b) après l'étape (c).

8. Procédé selon la revendication 6 ou 7, **caractérisé en ce que** l'électrolyte contient en outre du Cr(III) en une quantité qui correspond à 4-16 g/l de Cr₂O₃.

9. Couche structurée de particules solides de chrome, pouvant être obtenue par un procédé selon l'une des revendications 6 à 8.

10. Elément de machine revêtu, en particulier segment de piston, ayant une surface, comprenant une couche structurée de particules solides de chrome appliquée sur la surface, selon l'une des revendications 1-5 ou 9, et comprenant éventuellement en outre au moins une couche qui est disposée en-dessous de la couche structurée de particules solides de chrome et/ou au moins une couche qui est disposée au-dessus de la couche structurée de particules solides de chrome.
